# EUROPÄISCHE PATENTSCHRIFT

(11) **EP 2 576 264 B1**
(45) Veröffentlichungstag und Bekanntmachung des Hinweises auf die Patenterteilung: **13.01.2016**
(21) Anmeldenummer: 11701492.8
(22) Anmeldetag: 19.01.2011
(51) Int. Cl.: B60K 15/05, B60L 11/18, H02K 5/10, H02K 7/06

(54) **STELLANTRIEB FÜR EIN KRAFTFAHRZEUG**
ACTUATOR FOR MOTOR VEHICLE
MÉCANISME D'ACTIONNEMENT POUR VÉHICULE AUTOMOBILE

(30) Priorität: 09.09.2010 DE 102010040522; 09.09.2010 DE 202010012379 U; 28.05.2010 DE 102010029446
(43) Veröffentlichungstag der Anmeldung: 10.04.2013
(73) Patentinhaber: Kiekert Aktiengesellschaft, 42579 Heiligenhaus (DE)
(72) Erfinder: BASAVARAJAPPA, Madhu S., 40211 Düsseldorf (DE); CAVALIE, Nicolas, 78560 Le Port Marly (FR); ERICES, Bernardo, 51429 Bergisch Galdbach (DE); KUNST, Frank, 59348 Lüdinghausen (DE)
(74) Vertreter: Gille Hrabal
(86) Internationale Anmeldenummer: PCT/EP2011/050705
(87) Internationale Veröffentlichungsnummer: WO 2011/147593

(56) Entgegenhaltungen:
- EP-A1- 0 575 120
- EP-A2- 0 287 860
- EP-A2- 2 182 147
- WO-A2-2006/069564
- DE-A1- 4 210 084

## Beschreibung

Die Erfindung betrifft einen Stellantrieb für ein Kraftfahrzeug.

Die Druckschrift DE 102 59 465 A1 offenbart einen Stellantrieb für ein Tankklappenschloss eines Kraftfahrzeugs mit einem Elektromotor, der eine Spindel zu drehen vermag. Eine Drehbewegung der Spindel bewirkt eine lineare Verschiebung eines Riegels. Der Riegel wird durch einen Faltenbalg nach außen abgedichtet, um den Stellantrieb vor Feuchtigkeit und Verschmutzung zu schützen.

Aus der Druckschrift DE 196 42 687 A1 ist ein Stellantrieb bekannt, mit dem die Verbindung eines Ladesteckers und einer Ladebuchse zum Aufladen der Batterie eines Elektrokraftfahrzeugs verriegelt wird.

Die Druckschrift DE 102 14 398 A1 offenbart eine Vorrichtung, die beispielsweise zur Ver-/Entriegelung von Kraftfahrzeug-Türverschlüssen eingesetzt werden kann, wobei die Vorrichtung mit einem Formgedächtniselement ausgerüstet ist.

EP 0 287 860 beschreibt einen gattungsbildenden Stellantrieb.

Es ist Aufgabe der Erfindung, einen weiter entwickelten Stellantrieb zu schaffen. Insbesondere soll der Stellantrieb in einer Ausführungsform einen kleinen Bauraum aufweisen und/oder vor dem Eindringen von Staub und Feuchtigkeit geschützt sein.

Die Aufgabe der Erfindung wird insbesondere durch den Stellantrieb mit den Merkmalen des anspruchs 1 gelöst.

Ein Antriebsrad, das mit Hilfe eines Elektromotors angetrieben wird, geht auch aus den Druckschriften DE 102 59 465 A1 sowie DE 10 2004 063 814 A1 hervor. Das aus diesen Druckschriften bereits bekannte Antriebsrad ist im Unterschied zur vorgenannten Ausführungsform fest mit der Spindel des Stellantriebs verbunden. Es wird daher gemäß den Druckschriften DE 102 59 465 A1 sowie DE 10 2004 063 814 A1 ein davon unabhängiges Bauteil eingesetzt, das mit einem Innengewinde und einem ein- und ausfahrbaren Riegel versehen ist. Der Riegel entspricht dem vorgenannten Ende der Spindel, welches aus dem Gehäuse des Stellantriebs heraus gefahren werden kann. Für das Außengewinde des aus den Druckschriften DE 102 59 465 A1 sowie DE 10 2004 063 814 A1 bekannten, unabhängigen Bauteils muss im Vergleich zur vorliegenden Außenführungsform ein zusätzlicher Bauraum bereit gestellt werden. Im Vergleich zu diesem Stand der Technik kann daher durch die vorliegende Erfindung Bauraum eingespart werden. Das vorgeschlagene Antriebsrad mit dem Außengewinde nebst Gewindespindel ist außerdem im Vergleich zu den aus den Druckschriften DE 102 59 465 A1 sowie DE 10 2004 063 814 A1 bekannten damit korrespondierenden Bauteilen einfacher gebaut. Einfacher gebaute Bauteile können mit entsprechend geringerem Fertigungsaufwand hergestellt werden.

Bei einem Kraftfahrzeug besteht Bedarf, Bauteile verriegeln zu können und zwar insbesondere solche Bauteile, die von außen zugänglich sind. Ein Beispiel für ein solches Bauteil ist eine Klappe zur Abdeckung eines mit einer Kappe verschließbaren Tankstutzens, um so den Tankinhalt vor einem unbefugten Zugriff zu schützen. Ein weiteres Beispiel ist eine Verriegelung einer Verbindung zwischen einer Ladebuchse eines Elektrofahrzeugs und einem Ladestecker zum Aufladen der Batterie aus den in der Druckschrift DE 196 42 687 A1 bekannten Gründen. Das genannte Ende der Spindel, das aus dem Gehäuse heraus gefahren werden kann, dient daher in einer Ausführungsform als Riegel, um damit ein Bauteil zu verriegeln, so zum Beispiel eine Tankklappe eines Kraftfahrzeugs oder aber einen Ladestecker, der in eine Ladebuchse eines Kraftfahrzeugs hineingesteckt worden ist. Dieses ein- und ausfahrbare Ende der Spindel wird daher auch Riegel genannt. Beispiele für ein solches Verriegeln mit Hilfe eines Riegels eines Stellantriebs werden in der deutschen Patentanmeldung DE 10 2010 003 523 beschrieben. Diese in der deutschen Patentanmeldung DE 10 2010 003 523 beschriebenen Lösungen und Beispiele für ein Verriegeln von Bauteilen beziehen wir in den Offenbarungsgehalt der vorliegenden Anmeldung mit ein. Die hieraus bekannten Lösungen und Beispiele können also auch Ausgestaltungen der vorliegenden Erfindung sein.

Mit Hilfe eines elektrischen und/oder automatisierten Antriebs kann ein solches Verriegeln komfortabel durchgeführt werden. Für ein automatisches Verriegeln verfügt ein Bauteil, wie zum Beispiel eine Ladebuchse, über einen Sensor, der zu erkennen vermag, wenn ein anderes Bauteil verriegelt werden soll, so zum Beispiel ein Ladestecker, der in die Ladebuchse vollständig eingesteckt worden ist. Der Sensor aktiviert dann den Antrieb, der den Riegel in seine verriegelnde Stellung hinein bewegt.

Wird allerdings der Antrieb, so zum Beispiel die Elektrik oder Elektronik für den Antrieb gestört, so kann nicht mehr mit Hilfe des Antriebs entriegelt werden. Zum Beispiel im Fall einer Klappe, die einen Tankstutzen verdeckt, ist aber ein Entriegeln notwendig, um ein Fahrzeug trotz entsprechend gestörter Elektrik oder Elektronik fortbewegen zu können. Im Fall einer verriegelten Verbindung zwischen einer Ladebuchse und einem Ladestecker muss das Entriegeln ebenfalls zuverlässig unabhängig von Störungen der Elektrik oder Elektronik möglich sein, um mit einem Fahrzeug im Anschluss an ein Aufladen kurzfristig weiterfahren zu können. Aus diesem Grund umfasst der erfindungsgemäße Stellantrieb einen Hebel, mit dem der Riegel handbetätigt mittels einer Mechanik aus seiner verriegelnden bzw. ausgefahrenen Stellung heraus bewegt werden kann. Der Stellantrieb weist also eine Notentriegelungseinrichtung auf, die manuell betätigt werden kann. Einzelheiten und Ausführungsformen dazu sind der deutschen Patentanmeldung DE 10 2010 003 545 sowie der deutschen Patentanmeldung DE 10 2010 040 522 zu entnehmen. Wir beziehen die diesbezüglichen Offenbarungsgehalte dieser Anmeldungen in den Offenbarungsgehalt der vorliegenden Anmeldung mit ein. Die hieraus bekannten Lösungen und Beispiele können also auch Ausgestaltungen der vorliegenden Erfindung sein.

Der Hebel kann und sollte so angeordnet werden, dass dieser nur vom Innenraum eines Fahrzeugs aus entweder unmittelbar oder mittelbar zum Beispiel mit Hilfe eines Bowdenzugs betätigt werden kann, um einen Riegel in seine nicht verriegelnde bzw. eingefahrene Stellung zu bewegen. Da Kraftfahrzeuge grundsätzlich so beschaffen sind, dass wenigstens eine Fahrzeugtür und/oder -klappe auch rein mechanisch mit Hilfe eines Schlüssels geöffnet werden kann, kann sich ein Fahrer des Kraftfahrzeugs auch dann Zutritt zum Innenraum seines Fahrzeugs verschaffen, wenn eine für das Verriegeln vorgesehene Elektrik oder Elektronik gestört ist. Vom Innenraum aus kann dann der Fahrer den genannten Hebel des Stellantriebs manuell betätigen, um den Riegel von seiner ausgefahrenen Stellung zurück zu bewegen. Anschließend kann ein Fahrzeug erforderlichenfalls betankt werden oder aber ein Ladestecker von einer Ladebuchse abgenommen werden, um eine Fahrt mit dem Kraftfahrzeug zuverlässig kurzfristig fortsetzen zu können.

In einer besonders einfachen Ausführungsform der Erfindung besteht der Hebel aus einem Bolzen mit einem daran angebrachten Griffelement oder einer daran angebrachten Öse für das Einhängen eines Bowdenzugs. Der Bolzen wird in einem Kanal des Stellantriebs geführt und kann gegen einen mit dem Riegel verbundenen Anschlag bewegt werden und/oder berührt diesen Anschlag zumindest dann, wenn sich der Riegel in seiner ausgefahrenen Stellung befindet. Das Griffelement oder die Öse kann von außen (d.h. außerhalb des Stellantriebs) erreicht und bewegt werden. Das Griffelement kann so bewegt werden, dass der Bolzen den Anschlag bewegt und damit auch den Riegel zurück in seine eingefahrenen Stellung.

Befindet sich ein Bolzen des Riegels in einem Kanal, so weist der Stellantrieb vorteilhaft einen, insbesondere stationär angeordneten Dichtring auf, der einen Durchgang zwischen Bolzen und Kanal abzudichten vermag. Es kann so vermieden werden, dass Feuchtigkeit über den Kanal in das Innere, das heißt einen Innenraum des Stellantriebs, gelangen und die Funktionstüchtigkeit der darin befindlichen Elektrik und/oder Elektronik beeinträchtigen kann. Ist der Dichtring stationär angeordnet, so kann der Bolzen relativ zum Dichtring verschoben werden.

Ein der Führung dienender Kanal für den Bolzen ist vorzugsweise außerhalb des Innenraums angeordnet, in dem sich die Spindel nebst Antriebselementen für die Spindel befinden, um einen Riegel dem beschriebenen Doppelhub entsprechend bewegen zu können. Der Innenraum wird bei dieser Ausführungsform durch ein Gehäuse gebildet, in dem sich daher nicht der Führungskanal für den genannten Bolzen befindet. Der Führungskanal mündet in eine Bohrung des Gehäuses ein, durch die der Bolzen in den Innenraum hinein bewegt werden kann. Diese Ausführungsform stellt eine eigenständige Erfindung dar. Wir behalten uns vor, für diese eigenständige Erfindung einen eigenständigen Schutz zu beanspruchen.

Ist der Kanal für den Bolzen außerhalb des vorgenannten Innenraums angeordnet, so kann besonders einfach und zuverlässig ein staub- und feuchtigkeitsdichter Innenraum für die Spindel nebst ein oder mehreren Antriebselementen bereitgestellt werden.

In einer Ausführungsform umfasst der Stellantrieb einen drehbar gelagerten Hebel, mit dem in der Riegel des Stellantriebs aus seiner verriegelnden Stellung mechanisch durch eine Drehbewegung in seine nicht verriegelnde Stellung bzw. seine Ausgangsstellung bewegt werden kann und zwar in der aus deutschen Patentanmeldung 10 2010 040 522 bekannten Weise aus den hieraus bekannten Gründen. Dieser Stellantrieb weist also einen Drehmechanismus für eine Notentriegelung auf, der manuell betätigt werden kann. Die drehbare Lagerung für den Hebel kann vor allem im Vergleich zu einer verschiebbaren Lagerung besonders zuverlässig dicht ausgestaltet sein, ohne dass Feuchtigkeit oder Staub durch eine entsprechende Dichtung hindurch treten oder eine solche Dichtung beschädigen kann. Der drehbare Hebel ist also vor allem dann von besonderem Vorteil, wenn die Komponenten des Stellglieds, die innerhalb des Gehäuses des Stellglieds untergebracht sind, vor Staub und Feuchtigkeit geschützt werden sollen.

In einer besonders einfachen Ausführungsform umfasst der drehbare Hebel einen drehbaren Innenhebel, der über eine drehbar gelagerte Achse mit einem drehbaren Außenhebel in der in der deutschen Patentanmeldung 10 2010 040 522 beschriebenen Weise verbunden ist. Der Innenhebel befindet sich innerhalb des Gehäuses des Stellantriebs und kann daher nicht manuell betätigt werden. Der Außenhebel befindet sich außerhalb des Gehäuses des Stellantriebs und kann daher manuell betätigt werden. Die drehbar gelagerte Achse führt durch das Gehäuse des Stellantriebs hindurch. Wird der außen liegende Hebel gedreht, so wird die Drehbewegung über die Achse auf den Innenhebel übertragen. Der Innenhebel vermag durch eine entsprechende Drehbewegung den Riegel in seine Ausgangsstellung, also in seine nicht verriegelnde Stellung zu bewegen. Eine solche Ausführungsform realisiert auf technisch besonders einfache und zuverlässige Weise die gewünschte Notentriegelung.

Das Gehäuse des Stellantriebs ist in einer Ausführungsform staub- und feuchtigkeitsdicht verschlossen und zwar zumindest im eingebauten Zustand in einer Gesamtvorrichtung. Die Gesamtvorrichtung ist beispielsweise ein Kraftfahrzeug. Im Unterschied zu dem aus der DE 102 59 465 A1 bekannten Stand der Technik wird der Riegel allerdings vorzugsweise nicht durch einen Faltenbalg abgedichtet, sondern durch eine flache, am Gehäuse des Faltenbalgs anliegende Dichtmanschette oder durch eine in einer Nut befindlichen Ringdichtung, die um den Riegel herum verläuft. Dadurch wird im Vergleich zu dem aus der DE 102 59 465 A1 bekannten Stand der Technik der erforderliche Bauraum beträchtlich reduziert. Der Stellantrieb kann im eingebauten Zustand mit seiner Dichtmanschette gegen eine Wand eines Bauteils gepresst werden, wodurch die Verbindung zwischen der Wand des Bauteils und dem Stellantrieb besonders zuverlässig und dauerhaft feuchtigkeits- und staubdicht verschlossen wird und zwar insbesondere auch im Vergleich zu dem aus der DE 102 59 465 A1 bekannten Stand der Technik. Einschlägige Schutzklassen, die sich auf einen Schutz vor Feuchtigkeit und Staub beziehen, können problemlos erfüllt werden.

In einer Ausführungsform gibt es einen stationär angeordneten Dichtring, durch den der Riegel des Stellglieds hindurch reicht und relativ zu dem der Riegel bewegt werden kann. Dieser stationär angeordnete Dichtring grenzt dicht an den Riegel an. Der stationär angeordnete Dichtring ist so angeordnet und dimensioniert, dass dieser dazu beiträgt, den durch das Gehäuse des Stellantriebs gebildeten Innenraum staub- und feuchtigkeitsdicht gegenüber dem Riegel abzudichten. Die vorgenannte Dichtungsmanschette ist bei dieser Ausführungsform nicht erforderlich. Bauraum kann so weiter eingespart werden.

In einer Ausführungsform ist oder kann auch der Raum des Bauteils staubdicht und feuchtigkeitsdicht verschlossen werden, in den der Riegel zwecks Verriegelung hineinreicht. Ein Beispiel für ein solches Bauteil mit einem feuchtigkeitsdicht und staubdicht verschließbaren Raum, in den der Riegel eines Stellantriebs hineinreicht, geht aus der deutschen Patenanmeldung 10 2010 003 523.8 hervor. Es handelt sich bei einem solchen Bauteil insbesondere um eine Ladebuchse für ein Elektrofahrzeug, die geeignet staub- und feuchtigkeitsdicht verschlossen werden kann und zwar entweder durch einen Deckel oder aber durch einen Ladestecker. Wir beziehen den entsprechenden Offenbarungsgehalt der deutschen Patenanmeldung 10 2010 003 523.8 in die vorliegende Anmeldung mit ein. Insgesamt steht so eine Gesamtvorrichtung mit einem Antriebselement zur Verfügung, das im Vergleich zu dem aus der DE 102 59 465 A1 bekannten Stand der Technik einen sehr viel kleineren Bauraum aufweist und gerade im Vergleich zu diesem Stand der Technik sehr gut gegen Feuchtigkeit und Staub geschützt ist. Besonders anfällig für ein Eindringen von Luft und Feuchtigkeit in den Innenraum des Stellantriebs ist der Durchgangsbereich für den Riegel. Daher werden besonders bevorzugt zwei verschiedene Dichtmittel eingesetzt, wenn der Riegel in einen feuchtigkeitsdicht und staubdicht verschließbaren Raum eines weiteren Bauteils hinein gefahren werden kann. Das eine Dichtmittel in Form eines an den Riegel angrenzenden Dichtrings sorgt dauerhaft für eine dichte Verbindung zwischen dem Gehäuse des Stellantriebs und dem Riegel. Das andere Dichtmittel, welches in Form einer Dichtmanschette oder als Dichtring vorliegt, sorgt für eine geeignet dichte Verbindung zwischen dem besagten Bauteil und dem Gehäuse des Stellantriebs im Bereich des Riegels. Der besonders gefährdete Bereich beim Riegel wird so im befestigten Zustand des Stellantriebs an einem entsprechenden Bauteil doppelt gesichert, ohne dafür einen besonders großen, zusätzlichen Bauraum bereit stellen zu müssen.

In einer Ausführungsform der Erfindung verfügt der Stellantrieb über einen Sensor, so zum Beispiel einen Mikroschalter, der die Stellung des Riegels zu detektieren vermag. Zu diesem Zweck kann die Spindel oder der Riegel, falls dieser ein eigenständiges, von der Spindel unabhängiges Bauteil darstellt, mit einer Rampe verbunden sein, die einen Mikroschalter zu betätigen vermag, wenn der Riegel aus seiner verriegelnden Stellung heraus bewegt, also in Richtung Gehäuse bewegt wird. Umgekehrt kann die Rampe auch so angeordnet sein, dass diese den Mikroschalter betätigt, wenn der Riegel in seine verriegelnde Stellung hinein bewegt wird. Der Sensor kann mit einer Anzeige verbunden sein, die zum Beispiel im Inneren eines Fahrzeugs angeordnet ist. Der Fahrer eines Fahrzeugs kann sich so darüber informieren, welche Stellung der Riegel des Stellantriebs einnimmt. Weitere Einzelheiten zu einem solchen Mikroschalter nebst Betätigung und Einsatzmöglichkeiten werden in der deutschen Patentanmeldung 10 2010 003 545 beschrieben. Den entsprechenden Offenbarungsgehalt beziehen wir in die vorliegende Anmeldung mit ein.

In einer Ausführungsform der Erfindung wird ein einfacher Wandbereich des Gehäuses durch eine aus flexiblem Material bestehende Membran gebildet, die einen Druckausgleich zwischen dem Innenraum des Gehäuses und dem an das Gehäuse angrenzenden äußeren Bereich herbeiführen kann. Die Membran ist Teil einer einfachen Gehäusewand und nicht etwa ein zusätzliches Bauteil zur Gehäusewand oder aber Teil einer Doppelwand. Insoweit unterscheidet sich die vorliegende Membran von dem aus der Druckschrift DE 102 59 465 A1 bekannten Faltenbalg, der außerhalb des Gehä u-ses zusätzlich zu einer Gehäusewand angeordnet ist, durch die der Riegel des Stellantriebs hindurch reicht. Wird der Riegel relativ zum Gehäuse bewegt, so wird bei einem staubdichten und feuchtigkeitsdichten Gehäuse durch eine solche Bewegung der Innendruck im staubdichten und flüssigkeitsdichten Gehäuse verändert. Temperaturveränderungen können zu Druckunterschieden führen. Problematisch wäre vor allem das Entstehen eines Unterdrucks im Gehäuse, da ein Unterdruck das Eindringen von Feuchtigkeit und Staub begünstigen würde. Die flexible Membran bewirkt einen Druckausgleich zwischen dem Druck im Inneren des Gehäuses und dem herrschenden Außendruck. Durch diese Ausführungsform wird daher verbessert sichergestellt, dass der Innenraum dauerhaft feuchtigkeitsdicht und staubdicht verschlossen bleibt. Die Bereitstellung eines staubdichten und feuchtigkeitsdichten Gehäuses, das eine flexible Membran als Teil einer Gehäusewand eines Stellantriebs umfasst, stellt eine eigenständige Erfindung dar. Wir behalten uns vor, für diese Erfindung eigenständig Schutz zu beanspruchen.

Insbesondere reicht durch die genannte Membran kein bewegliches Bauteil hindurch. Auch in dieser Hinsicht unterscheidet sich die Membran von dem aus der Druckschrift DE 102 59 465 A1 bekannten Faltenbalg. Bevorzugt ist die Membran wellenförmig ausgestaltet, um das Verformen zwecks Druckausgleich zu erleichtern. Ein oder mehrere Wellenberge und/oder Wellentäler verlaufen bevorzugt ringförmig.

Die Membran kann aus einem Elastomer bestehen, so zum Beispiel aus Gummi. Das Gehäuse besteht dann bevorzugt darüber hinaus aus einem starren Material wie zum Beispiel einem wenig biegsamen Kunststoff, so zum Beispiel aus Polypropylen.

Die Membran weist vorzugsweise eine umlaufende Nut auf, die in einen Öffnungsbereich der Gehäusewand eingesetzt wird, um eine geeignet dicht mit der angrenzenden Wand des Gehäuses einfach und schnell verbunden werden zu können. Der Randbereich der genannten Öffnung reicht dann in die Nut hinein.

Der Stellantrieb kann außerdem eine vorgespannte Feder umfassen, die den Riegel aufgrund ihrer Vorspannung in eine vorgesehene Richtung zu bewegen vermag, so zum Beispiel in die verriegelnde, also ausgefahrene Stellung hinein. Es steht dann ein ergänzendes mechanisches Mittel zur Verfügung, um den Riegel auch mechanisch in seine verriegelnde Stellung bewegen zu können, beispielsweise im Anschluss an eine Freigabe einer Arretierung des Hebels einer Notentriegelungseinrichtung. Die Funktionstüchtigkeit des Stellantriebs kann so weiter verbessert sichergestellt werden.

Insgesamt kann ein solcher Stellantrieb sehr klein gebaut sein. Ein erfindungsgemäßer Stellantrieb ist insbesondere Teil einer Verriegelung für eine Klappe, mit der ein Tankstutzen abgedeckt wird, oder Teil einer Verriegelung für eine Ladebuchse eines elektrisch angetriebenen Kraftfahrzeugs mit einem Ladestecker. Dient der Stellantrieb in einer Ausführungsform der Erfindung der Verriegelung einer Verbindung zwischen einer Ladebuchse eines Elektrofahrzeugs und einem Ladestecker, so reicht der Riegel vorzugsweise zwecks Verriegelung in eine Ausnehmung oder in ein Loch in einer Gehäusewand des Ladesteckers hinein, um auf einfache und kompakte Weise die Verriegelung zu bewirken. Vorzugsweise ist der Stellantrieb dann von außen an einer Gehäusewand der Ladebuchse befestigt. Weiter ist zu bevorzugen, dass Ladebuchse und Stecker so beschaffen sind, dass diese durch eine reine Translationsbewegung verbunden werden. Für ein Verbinden ist also keine Drehbewegung in der aus der DE 196 42 687 A1 bekannten Weise erforderlich. Diese Ausführungsform der Erfindung benötigt einen relativ kleinen Bauraum, da kein Raum für eine Drehbewegung in einem Gehäuse bereit gestellt werden muss, welches zugleich vor einem versehentlichen Berühren der elektrischen Kontakte schützt.

Der Stellantrieb kann auch mehrere Riegel aufweisen, wenn ein Bauteil besonders sicher verriegelt werden soll.

Ein Stellantrieb wird bevorzugt wie folgt hergestellt:
- Einlegen eines ersten Dichtrings in eine umlaufende Nut einer ersten oder zweiten Gehäusehälfte, bevorzugt in die erste Gehäusehälfte.
- Einsetzen einer Membran mit umlaufender Nut in eine Öffnung einer ersten oder zweiten Gehäusehälfte, bevorzugt in die erste Gehäusehälfte.
- Einschieben eines zweiten Dichtrings in einen doppelwandigen Bereich einer der beiden Gehäusehälften, bevorzugt in die zweite Gehäusehälfte.
- Hindurchschieben einer Spindel mit Außengewinde und einem Auslegarm durch den eingeschobenen zweiten Dichtring in Richtung ausgefahrener Stellung. Der Auslegearm kann bereits eine Rampenform umfassen oder aber zusätzlich einen weiteren Arm mit Rampenform aufweisen, um mit Hilfe der Rampe einen Mikroschalter betätigen zu können. Gibt es einen weiteren Arm, so schließt dieser mit dem Auslegearm einen Winkel von vorzugsweise 90° ein, um in einen anderen Bereich des Gehäuses hineinzureichen. Dies erlaubt eine flexiblere Anordnung eines Mikroschalters im Gehäuse.
- Aufsetzen eines Antriebsrads mit Innengewinde auf ein oder mehrere Lager einer Gehäusehälfte, bevorzugt auf ein Lager der zweiten Gehäusehälfte.
- Einschrauben des Außengewindes der Spindel in das Innengewinde des Antriebsrads bevorzugt durch Drehen des Antriebsrads.
- Einsetzen eines Mikroschalters in eine Gehäusehälfte und zwar bevorzugt in die zweite Gehäusehälfte. Bei Bedarf wird die Spindel vor oder nach dem Einsetzen des Mikroschalters so gedreht, dass der Arm mit der Rampe die gewünschte Lage relativ zum Mikroschalter einnimmt.
- Einsetzen eines Elektromotors in eine Gehäusehälfte und zwar bevorzugt in die zweite Gehäusehälfte.
- Einschieben eines dritten Dichtrings in einen doppelwandigen Bereich einer Gehäusehälfte und zwar bevorzugt der zweiten Gehäusehälfte.
- Einschieben eines Bolzens mit daran befestigtem Griffelement in einen Kanal durch den dritten Dichtring hindurch in Richtung Innenraum einer Halbschale.
- Verbinden von zwei Halbschalen mit Hilfe von Schrauben oder Nieten.
- Einsetzen eines vierten Dichtrings um eine um den Riegel bzw. die Spindel umlaufende Nut herum, die durch die beiden Halbschalen bereitgestellt wird. Dieser vierte Dichtring weist dann den zusätzlichen Vorteil auf, dass die beiden Gehäusehälften in diesem kritischen Bereich durch einen vorgespannt sitzenden, elastischen Dichtring ergänzend zusammengepresst werden.

Das verfahrensgemäße Einsetzen einer Membran mit umlaufender Nut in eine Öffnung einer ersten oder zweiten Gehäusehälfte, bevorzugt in die erste Gehäusehälfte erfolgt nur optional, wenn eine solche Membran vorgesehen wird. Dieser Verfahrensschritt entfällt also, wenn keine Membran vorgesehen ist.

Ein Dichtring im Sinne des Verfahrensanspruchs kann auch eingelegt werden, indem der Dichtring in die umlaufende Nut einer Gehäusehälfte eingespritzt wird.

In einer Ausführungsform ist der Stellantrieb an einem Karosserieelement für ein Elektrofahrzeug angebracht, das umfasst:
eine Ladebuchse für ein Aufladen einer Batterie des Elektrofahrzeugs, eine erste Klappe für eine Abdeckung der Ladebuchse, eine zweite Klappe für eine Abdeckung der ersten Klappe, wobei der Stellantrieb so angebracht ist, dass die erste Klappe oder die zweite Klappe mit Hilfe des Stellantriebs verriegelt werden kann.

Die erste Klappe dient dem eigentlichen Verschließen der Ladebuchse, um diese beispielsweise vor Luft und Feuchtigkeit zu verschließen. Diese ist daher bevorzugt im Vergleich zur zweiten Klappe wesentlich kleiner, da so a b-zudichtende Bereiche zwischen Klappe und Gehäuse der Buchse minimiert werden können. Insbesondere ist die Grundfläche der ersten Klappe klein im Vergleich zur zweiten Klappe.

Die zweite Klappe bildet im geschlossenen Zustand mit dem Karosserieelement vorzugsweise eine einheitliche Oberfläche und zwar von außen gesehen. Eine solche Klappe, die von außen gesehen als der Teil der Karosserie wirkt und daher grundsätzlich in gleicher Farbe wie die Karosserie lackiert ist, ist von Tankeinfüllstutzen im Prinzip bekannt. Um einen Ladestecker in die Ladebuchse stecken zu können, muss also erst die zweite Klappe und anschließend die erste Klappe geöffnet werden.

Um einen unbefugten Zugriff zu verhindern, wird insbesondere die zweite Klappe im geschlossenen Zustand durch den Stellantrieb verriegelt. Da die von außen stets sichtbare Oberfläche bzw. die Grundfläche der zweiten Klappe besonders groß ist, kann der Stellantrieb vorteilhaft besonders variabel platziert werden. Da eine entsprechende Auswahlmöglichkeit besteht, kann daher die zweite Klappe in der Regel unmittelbar durch diesen ersten Stellantrieb verriegelt werden.

In einer Ausführungsform gibt es neben diesem ersten Stellantrieb noch einen zweiten Stellantrieb für ein Verriegeln eines in die Ladebuchse eingesteckten Ladesteckers. Auch der zweite Stellantrieb kann unmittelbar vor allem dann an dem Gehäuse der Ladebuchse angebracht sein, wenn der erste Stellantrieb dem Verriegeln der äußeren zweiten Klappe dient und daher hinreichend räumlich entfernt von der Ladebuchse angeordnet ist.

Es ist zweckmäßig, den ersten und/ oder den zweiten Stellantrieb von der zweiten Klappe aus gesehen hinter dem Karosserieelement anzuordnen. Beide Stellantriebe sind damit vor einem unmittelbaren Zugriff geschützt. Eine mechanische Notentriegelungseinrichtung eines Stellantriebs kann daher nicht unmittelbar betätigt werden. Unbefugte Betätigungen können so verhindert werden. In der Regel werden die Stellantriebe allerdings elektrisch betätigt, um den jeweiligen Riegel in die jeweils gewünschte Stellung zu bewegen.

Insbesondere die erste Klappe und/ oder das Gehäuse der Ladebuchse ist mit ein oder mehreren Dichtmitteln, insbesondere mit ein oder mehreren Dichtringen so versehen ist, dass die erste Klappe die Ladebuchse staubdicht und/ oder feuchtigkeitsdicht zu verschließen vermag. Dies ist gerade im Fall von Fahrzeugen besonders wichtig, da ein Fahrzeug auch extremen Witterungsbedingungen gewachsen sein muss.

Nachfolgend wird die Erfindung anhand von Ausführungsbeispielen näher erläutert. Hieran werden weitere Ausführungsformen und Vorteile der Erfindung verdeutlicht.

Es zeigen:
Fig. 1: Stellantrieb von außen
Fig. 2: Stellantrieb von außen
Fig. 3: Stellantrieb von innen
Fig. 4 Ausschnitt Membran
Fig. 5: Ausschnitt im Bereich eines Riegels
Fig. 6: Hebel für Notentriegelungseinrichtung

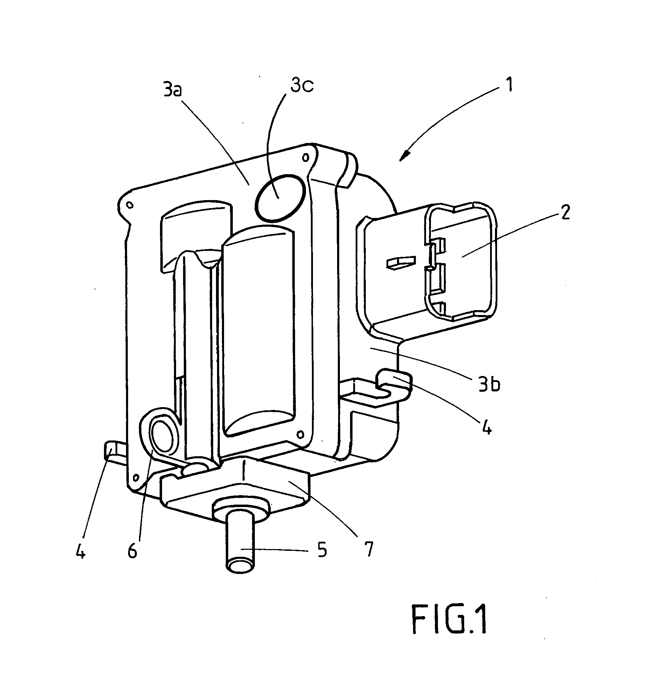

Figur 1 zeigt ein erstes Beispiel eines Stellantriebs 1 mit einer Anschlussbuchse 2, über die der Stellantrieb an eine elektrische Stromquelle angeschlossen werden kann. Der eigentliche Antrieb für den Riegel ist im Inneren des Gehäuses untergebracht. Das Gehäuse besteht aus zwei Halbschalen 3a und 3b, die mit vier Schrauben miteinander verbunden sind. Zwischen den beiden Halbschalen 3a und 3b befindet sich eine zum Beispiel aus Gummi oder einem anderen elastischen Material bestehende, vorzugsweise schnurförmige Dichtung, um die beiden Halbschalen 3a und 3b staub- und feuchtigkeitsdicht miteinander zu verbinden. Eine dehnbare Membran 3c ist Teil der Halbschale 3a. Die Halbschale 3a besteht darüber hinaus aus relativ starrem Kunststoffmaterial. Auch die Halbschale 3b besteht aus relativ starrem Kunststoffmaterial. Das Gehäuse 3a, 3b umfasst zwei an gegenüberliegenden Wänden des Gehäuses angebrachte, vorstehende Laschen 4, die U-förmig gebogen sind. Die Laschen 4 dienen der Befestigung des Stellantriebs 1 zum Beispiel mit Hilfe von Schrauben an einem weiteren Bauteil wie zum Beispiel an einer Ladebuchse eines Kraftfahrzeugs, über die eine Batterie eines elektrisch angetriebenen Kraftfahrzeugs aufgeladen werden kann. Der Stellantrieb 1 umfasst einen Riegel 5, der durch einen im Gehäuse 3a, 3b befindlichen Elektromotor linear verfahren werden kann. Aus einer seitlichen Wand des Gehäuses 3a, 3b ragt eine Öse 6 eines Hebels hervor, mit dessen Hilfe der Riegel 5 ausgehend von seiner gegenüber dem Gehäuse 3a, 3b vorstehenden, verriegelnden Stellung mechanisch zurück in Richtung des Gehäuses 2 bewegt werden kann. Die Öse 6 kann leicht erfasst und handbetätigt bewegt werden, so zum Beispiel mittelbar mit Hilfe eines Bowdenzugs, der in der Öse 6 in dafür geeigneter Weise eingehängt ist.

Der Hub des Riegels beträgt in einem Ausführungsbeispiel wenigstens zehn mm, um besonders zuverlässig und sicher mit Hilfe des Riegels ein gewünschtes Bauteil wie zum Beispiel eine Tankklappe oder eine Verbindung zwischen einem Ladestecker und einer Ladebuchse verriegeln zu können.

Um den Riegel 5 herum verläuft eine von außen auf das Gehäuse 3a, 3b gesetzte Dichtungsmanschette 7, die dicht gegen ein Bauteil gepresst wird, an dem der Stellantrieb befestigt wird. Diese Dichtungsmanschette trägt dazu bei, dass in den Innenraum des Stellantriebs kein Staub und keine Feuchtigkeit gelangen kann, so dass einschlägige Schutzklassen und zwar insbesondere auch die Schutzklasse IP67 erfüllt werden können. Die Dichtungsmanschette vergrößert außerdem aufgrund ihrer flachen Form praktisch nicht den benötigten Bauraum.

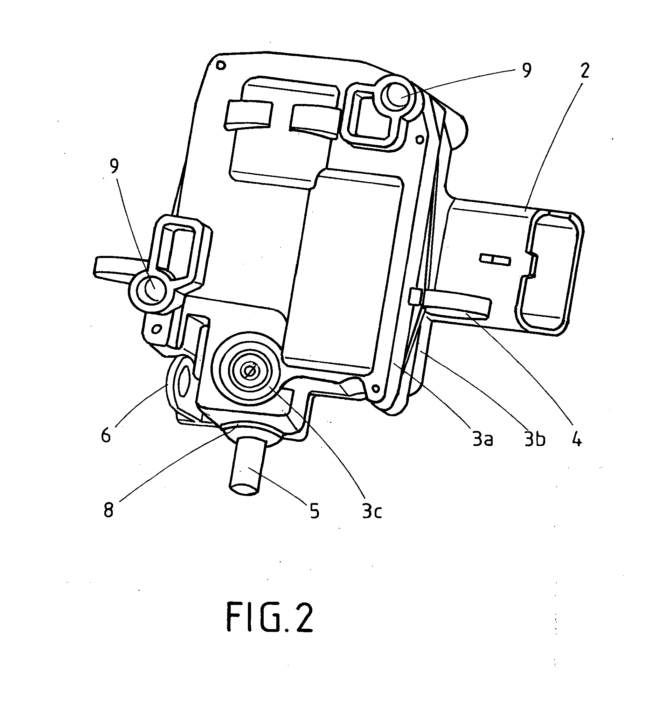

Der in der Figur 1 gezeigte Stellantrieb kann darüber hinaus so beschaffen sein, wie dies in der deutschen Patentanmeldung 10 2010 003 545 beschrieben wird. Insbesondere weist der Stellantrieb dann darüber hinaus die Merkmale des Ausführungsbeispiels nach den Figuren 2 bis 4 auf und zwar vollständig oder in Kombination mit einzelnen aus den Figuren 2 bis 4 bekannten Merkmalen.

Die Figur 2 zeigt ein zweites Ausführungsbeispiel eines Stellantriebs. Anstelle einer Dichtungsmanschette weist dieser Stellantrieb einen stationär angeordneten Dichtring 8 auf. Der Dichtring 8 befindet sich innerhalb einer umlaufenden Nut, die durch die beiden Halbschalen 3a und 3b des Gehäuses bereitgestellt wird. Wird der Dichtring in eine geeignet dimensionierte Ausnehmung eines Bauteils gepresst, mit dem der Stellantrieb verbunden werden soll, so entsteht zwischen diesem Bauteil und dem Stellantrieb eine entsprechende staubdichte und flüssigkeitsdichte Verbindung.

Anstelle einer einfachen Membran aus dehnbarem Material umfasst die in der Figur 2 gezeigte Ausführungsform eine aus flexiblem Material bestehende Membran 3c mit wenigstens einem ringförmig verlaufenden Wellenberg und/oder wenigstens einem ringförmig verlaufenden Wellental. Die Membran 3c trägt auch bei geringen Druckunterschieden für einen Druckausgleich Sorge. Die Membran 3c ist benachbart zum Riegel 5 angeordnet, dessen Bewegungen für Druckveränderungen innerhalb des Gehäuses sorgen. Druckveränderungen können aufgrund der räumlichen Nähe besonders schnell durch die Membran ausgeglichen werden.

Das Gehäuse umfasst im Vergleich zu dem in der Figur 1 gezeigten Gehäuse zum Beispiel zwei Bohrungen 9, die senkrecht zu den Öffnungen der Laschen 4 verlaufen. Die beiden Bohrungen 9 dienen als alternative oder ergänzende seitliche Befestigungsmöglichkeit des Stellantriebs an einem Bauteil zum Beispiel mit Hilfe von Schrauben.

Ein weiterer Unterschied des in der Figur 2 gezeigten Ausführungsbeispiels im Vergleich zu dem in der Figur 1 gezeigten Ausführungsbeispiels besteht in Anordnung des Hebels mit der Öse 6, der im Fall der Figur 2 seitlich neben dem Riegel 5 angeordnet ist und nicht wie im Fall der Figur 1 oberhalb des Riegels. Der dem Riegel 5 zugeordnete Spindel befindet sich dann zwischen dem Hebel mit der Öse 5 und einem Elektromotor für den Antrieb der Spindel des Stellantriebs. Der Bolzen des Hebels mit der Öse 6 befindet sich in einem Führungskanal, der außerhalb des Innenraums angeordnet ist, der durch die beiden Halbschalen 3a und 3b bereitgestellt wird.

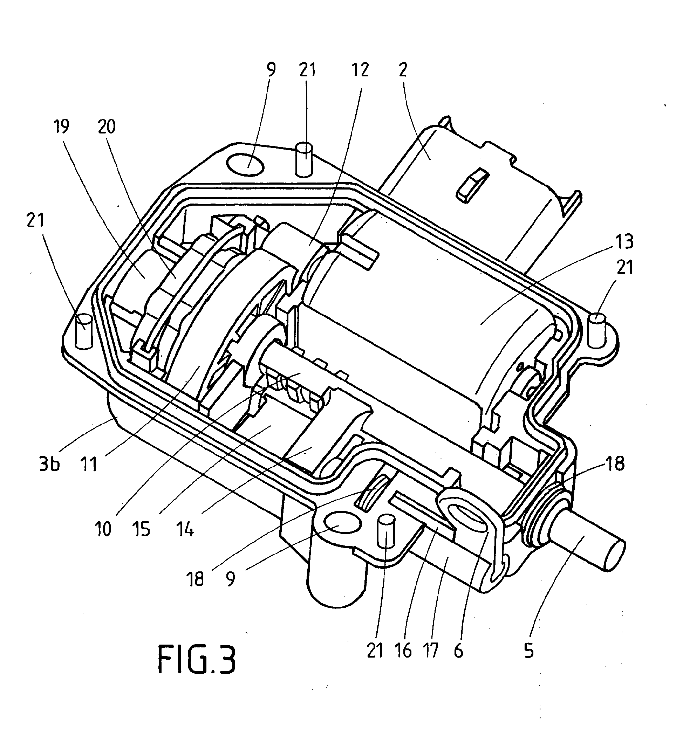

Figur 3 zeigt den Stellantrieb aus Figur 2 ohne die Halbschale 3a, so dass der Innenraum sichtbar wird. Der Riegel 5 ist ein Endbereich der Spindel 10. Das Außengewinde der Spindel 10 reicht in ein Innengewinde des Antriebsrads 11 hinein. Das Antriebsrad 11 liegt an einer Welle 12 des Elektromotors 13 an. Das Antriebsrad 11 kann daher durch die Welle 11 mit Hilfe des Elektromotors 13 gedreht werden. An der Spindel 10 ist ein senkrecht abstehender Auslegearm 14 befestigt, der drei Funktionen erfüllen kann. Der Auslegarm kann zunächst dafür Sorge tragen, dass ein Drehen des Antriebsrads 1 1 nicht zur Folge hat, dass die Spindel 10 unerwünscht mit gedreht wird. Auf diese Weise wird erreicht, dass ein Drehen des Antriebsrads 11 eine translatorische Bewegung der Spindel 10 und damit des Riegels 5 zur Folge hat. Eine translatorische Bewegung der Spindel 10 geht mit einer entsprechende translatorischen Verschiebung einher. Beispielsweise aufgrund einer geeignet rampenförmigen Ausgestaltung des Hebelarms kann ein Taster des Mikroschalters 15 betätigt werden. Der Mikroschalter 15 vermag so zu signalisieren, in welcher Stellung sich der Riegel 5 befindet. Außerdem kann der Auslegearm 14 Teil einer mechanischen Notentriegelungseinrichtung sein. Zu einer solchen mechanischen Notentriegelungseinrichtung gehört der Bolzen 16, der mit Hilfe der Öse 6 handbetätigt in den Innenraum des Gehäuses hinein geschoben werden kann. Der Bolzen 16 verschiebt durch eine solche Bewegung den Auslegearm 14 entsprechend und damit den Riegel 5 zurück in das Gehäuse hinein, wenn der Riegel 5 sich zuvor in seiner ausgefahrenen Stellung befunden hat. Da der Auslegarm 14 insgesamt drei Funktionen übernehmen kann, trägt dies zu einem besonders kompakten und einfachen Aufbau des Stellantriebs bei. An der Spindel 10 kann aber beispielsweise zusätzlich zum Auslegearm 14 eine senkrecht abstehende Rampe angebracht sein, mit der der Mikroschalter betätigt wird. Der Auslegearm 14 muss also nicht zwingend drei Funktionen erfüllen. Dieser führt bereits zu einem besonders kompakten Bauraum, wenn er nur zwei von den drei genannten möglichen Funktionen zu erfüllen vermag.

Der Bolzen 16 wird durch einen Kanal 17 geführt, der sich außerhalb des Innenraums befindet, in dem die Spindel 10 nebst Antrieb und Mikroschalter 15 angeordnet sind. Der Kanal 17 führt zunächst durch einen Spalt hindurch, in dem ein Dichtring 18 an die Spaltwände dicht angrenzend eingesetzt ist. Der Bolzen 18 führt durch den Dichtring 18 hindurch, der zugleich an dem Bolzen 16 dicht anliegt. Schließlich mündet das Ende des Bolzen 16, welches den Auslegearm 14 zu bewegen vermag, in eine Bohrung in der Halbschale 3b ein, die in den Innenraum hinein führt. Dieses Ende des Bolzens 16 kann durch die Bohrung hindurch in den Innenraum hinein geschoben werden, um den Auslegearm 14 und damit den Riegel 5 entsprechend verschieben zu können.

Die Halbschale 3b umfasst eine Doppelwand, durch die der Riegel 5 hindurch geschoben werden kann. Dicht an die Wände dieser Doppelwand angrenzend ist ein Dichtring 18 eingesetzt, der zugleich dicht an den benachbarten umlaufenden Bereich des Riegels 5 bzw. den benachbarten umlaufenden Bereich der Spindel 10 angrenzt. Mit geringem Platzbedarf wird so eine dauerhafte staubdichte und flüssigkeitsdichte Verbindung zwischen dem Gehäuse und dem Riegel 5 bzw. der Spindel 10 geschaffen.

Das Antriebsrad umfasst ein Hülse 19, die mit dem Innengewinde des Rads versehen ist, in die das Außengewinde der Spindel 10 hinein reicht. Je länger diese Hülse gewählt wird, umso länger ist der Hub bzw. der Doppelhub des Riegels 10. Die Hülse 19 dient also der Bereitstellung eines besonders langen Hubs. Die Länge der Hülse 19 wird daher an die gewünschte Hublänge angepasst.

Der Stellantrieb kann eine bereits aus der Druckschrift DE 102 59 465 A1 bekannte Federkassette 20 umfassen. Wie in der Druckschrift DE 102 59 465 A1 beschrieben, kann mit Hilfe einer in der Federkassette 20 befindlichen Spiralfeder bei eingefahrener Spindel und unbestromten Motor die Spindel 10 bzw. der Riegel 5 automatisch wieder ausgefahren werden.

In der Figur 3 werden vier Schrauben 21 skizziert, mit denen die beiden Gehäusehälften verbunden werden.

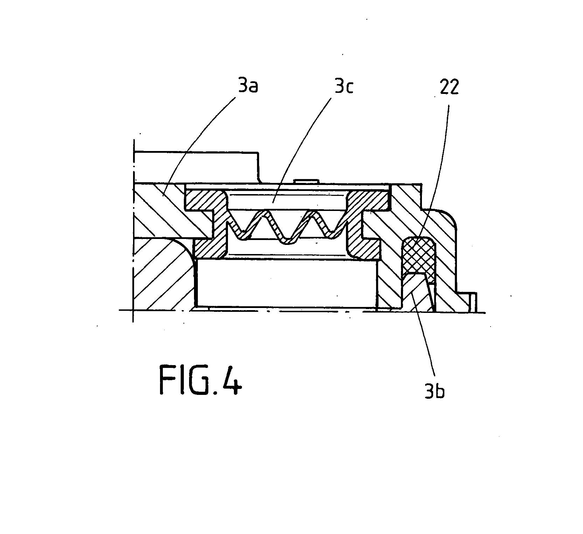

Figur 4 zeigt im Schnitt einen Ausschnitt des zweiten Ausführungsbeispiels, der den wellenförmigen Verlauf der Membran 3c verdeutlicht. Da die Membran 3c aus einem biegsamen, vorzugsweise elastischen Material wie Gummi besteht, kann diese leicht wie dargestellt in eine kreisrunde Öffnung der Gehäusehälfte 3a eingesetzt werden. Außerdem wird ein Dichtring 22 im Schnitt dargestellt, der eine feuchtigkeitsdichte und staubdichte Verbindung zwischen den beiden Gehäusehälften 3a und 3b schafft.

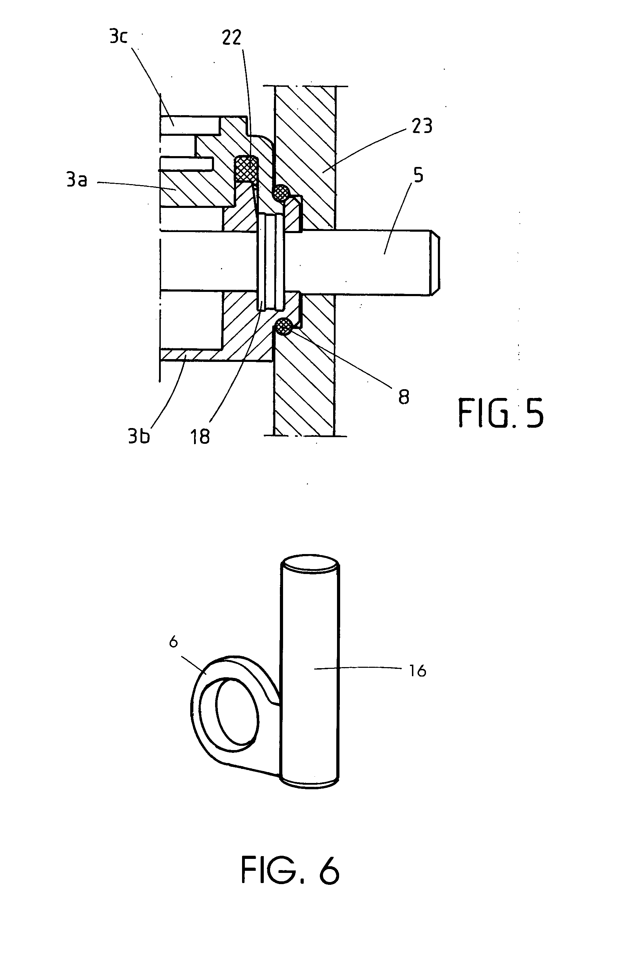

Figur 5 zeigt im Schnitt einen Ausschnitt des zweiten Ausführungsbeispiels im Bereich des Riegels 5, wenn der Stellantrieb wie dargestellt in eine Ausnehmung einer Wand 23 eines Bauteils gepresst ist. Der Dichtring 8 sorgt dann für eine entsprechende dichte Verbindung zwischen der Wand 23 und dem Stellantrieb im Bereich des Riegels 5.

In der Figur 6 wird der Hebel der Notentriegelungseinrichtung gezeigt. Dieser kann am Ende des Bolzens wie gezeigt und in der deutschen Patentanmeldung 10 2010 003 545 beschrieben einen Dichtring aufweisen, um beispielsweise zu verhindern, dass der Hebel der Notentriegelungseinrichtung versehentlich aus dem Stellantrieb herausgezogen wird. Es genügt aber auch ein einfacher Bolzen 16 ohne Dichtring nebst einer für das Halten eines solchen Dichtrings vorgesehenen Nut im Bolzen 16 .

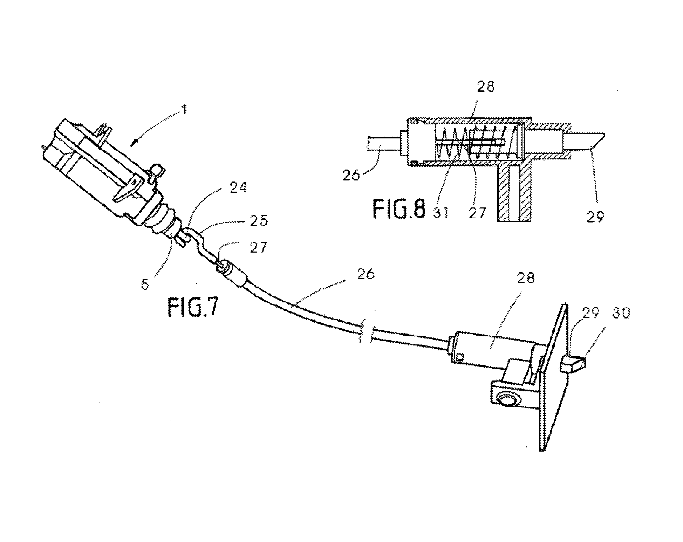

Die Fig. 7 zeigt einen Stellantrieb 1 mit einem Riegel 5, dessen Ende eine Öse 24 aufweist. In die Öse 24 ist ein Haken 25 eines Bowdenzugs 26 eingehängt. Der Haken 25 ist mit dem eigentlichen Seilzug 27 des Bowdenzugs 26 verbunden. Das andere Ende des Bowdenzugs 26 ist mit einem Verriegelungselement 28 verbunden. Das Verriegelungselement 28 verfügt über eine Falle 29. Die Falle 29 weist am Ende eine Schräge 30 auf, wie diese von einer Falle eines Schlosses bereits bekannt ist. Wird der Riegel 5 von einer ausgefahrenen Stellung in das Gehäuse hinein bewegt, so wird die Falle 29 über den Bowdenzug 26 ebenfalls in das Gehäuse des Verriegelungselements 28 bewegt. Es kann so entriegelt werden und zwar fernbetätigt. Der Stellantrieb 1 muss also nicht an dem Ort untergebracht sein, bei dem verriegelt werden soll, so z. B. bei einer Tankklappe oder bei einer Verbindung zwischen einem Ladestecker und einer Ladebuchse. Eine solche Ausführungsform ist besonders dann von Vorteil, wenn wenig Bauraum am Ort der Verriegelung zur Verfügung steht.

Der Stellantrieb ist in einem solchen Fall insbesondere so ausgeführt, dass der Riegel 5 lediglich elektrisch in das Gehäuse des Stellantriebs 1 hinein bewegt wird. Für ein Herausbewegen bzw. Herausfahren ist dann vorteilhaft eine Feder vorhanden, die aufgrund einer Vorspannung den Riegel 5 in die ausgefahrene Stellung zu bewegen vermag. Wird der elektrische Antrieb deaktiviert, so springt dann der Riegel 5 automatisch in die ausgefahrene Stellung aufgrund der Feder zurück. Bei der Feder kann es sich um eine Spiralfeder handeln, die eine Spindel verdreht, wobei die Drehbewegung der Spindel das Bewegen des Riegels bewirkt. Dies hat zur Konsequenz, dass sich dann die Falle 29 ebenfalls in der ausgefahrenen Stellung befindet. Wird eine Klappe geschlossen, die mit der Falle 29 verriegelt werden soll, so drückt die Klappe durch ein entsprechendes Element, so durch zum Beispiel einen Bolzen erst einmal die Falle zurück in Richtung Gehäuse und zwar aufgrund der Schräge 30, wie dies von Schlössern mit derartigen Fallen bereits bekannt ist. Passiert das entsprechende Element, also zum Beispiel der Bolzen auf diese Weise die Falle 29, so springt anschließend die Falle 29 hinter das Element wie zum Beispiel hinter dem Bolzen zurück in die ausgefahrene Stellung, wodurch die Klappe verriegelt wird. Diese kann dann grundsätzlich nur geöffnet werden, indem die Falle mit Hilfe des Stellantriebs in Richtung Gehäuse zurück bewegt wird. In gleicher Weise verhält es sich, wenn ein Stecker in eine Ladebuchse eines Elektrofahrzeugs eingesteckt wird. Auch hier gibt es ein Element, welches die Falle 29 zunächst zurückdrückt, bis die Falle 29 das Element passiert hat. Springt anschließend die Falle 29 zurück, so ist die Verbindung zwischen dem Ladestecker und der Ladebuchse verriegelt. Erst für ein Entriegeln wird der Stellantrieb im Normalbetrieb elektrisch bestätigt. Es wird so der Verbrauch von elektrischem Strom minimiert.

In der Fig. 8 wird der Aufbau des Verriegelungselements 28 im Schnitt dargestellt. Im Inneren des Verriegelungselements bzw. innerhalb des entsprechenden Gehäuses befindet sich eine vorgespannte Feder 31, die die Falle 29 aus dem Gehäuse des Verriegelungselements 28 herausdrückt. Die Falle 29 ist mit dem Seilzug 27 des Bowdenzugs 26 verbunden.

Springt der Riegel 5 eines Stellantriebs 1 aufgrund einer entsprechend vorgespannten Feder in die ausgefahrene Stellung zurück, sobald ein elektrischer Antrieb nicht betätigt wird, so kann auch das außen liegende Ende des Riegels 5 bereits eine Schräge wie zuvor beschrieben, also wie bei einer Falle eines Türschlosses aufweisen. In diesem Fall ist der Stellantrieb unmittelbar am Ort der Verriegelung vorzusehen. Das Verriegeln geschieht in gleicher Weise wie vorbeschrieben. Nur für ein Entriegeln wird dann elektrischer Strom benötigt.

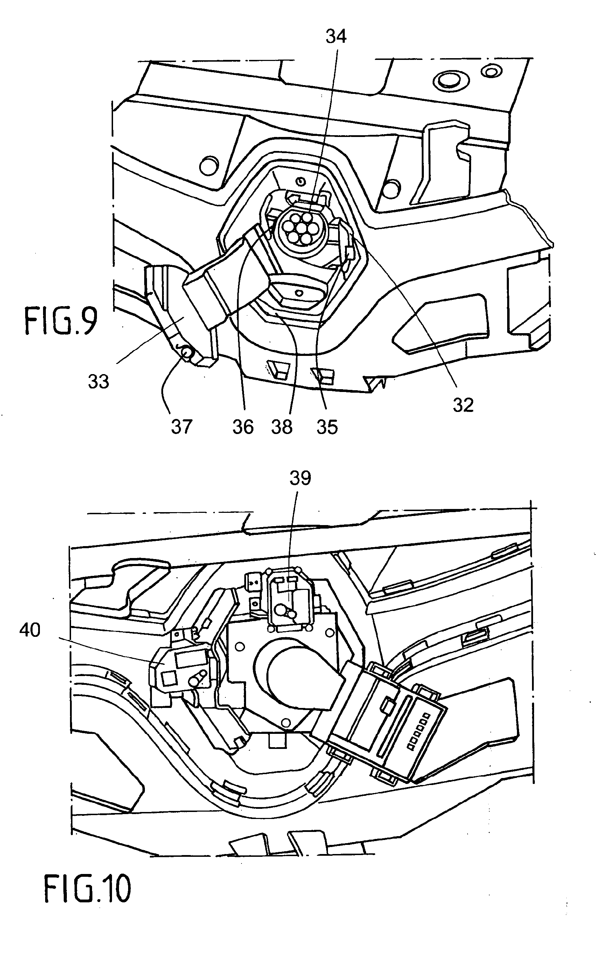

In der Fig. 9 wird ein Karosserie-Element gezeigt, welches eine erste Klappe 32 und eine zweite Klappe 33 umfasst. Beide Klappen werden im geöffneten Zustand gezeigt. Mit Hilfe der ersten Klappe 32 kann ein Gehäuse 34 einer Ladebuchse staubdicht und feuchtigkeitsdicht verschlossen werden. Für ein Verschließen weist die erste Klappe 32 eine federnde Lasche 35 auf, die in einen Bolzen 36 aufgrund eines entsprechenden innen liegenden Vorsprungs einrastet. Der Bolzen 36 ist an dem Gehäuse 34 fest angebracht. Am Rand der Klappe 33 gibt es ein Klammerelement 37, welches der Verriegelung der zweiten Klappe 33 dient, wenn mit dieser die Öffnung zur Ladebuchse hin verschlossen wird. Wird die Klappe 33 geschlossen, so gelangt ein Riegel eines Stellglieds in das Klammerelement 37 hinein. Auf diese Weise wird die zweite Klappe 33 so gehalten, dass diese nur geöffnet werden kann, wenn der Riegel in das Gehäuse des entsprechenden Stellantriebs zurückbewegt wird. Die Ladebuchse ist so dann vor einem unbefugten Zugriff geschützt.

Die Grundfläche der ersten Klappe 32 ist so klein, wie dies für das Verschließen des relativ kleinen Gehäuses 34 erforderlich ist. Es muss damit nur der Umfangsbereich des Gehäuses 34 staubdicht und flüssigkeitsdicht abgedichtet werden, wenn der innen liegende Bereich der Ladebuchse mit den darin befindlichen elektrischen Kontakten durch die Klappe 32 staub- und feuchtigkeitsdicht abgedichtet werden soll. Die Grundfläche der zweiten, darüber angeordneten Klappe 33 ist demgegenüber wesentlich größer. Zwar kann auch im geschlossenen Zustand die zweite Klappe 33 gegen einen zum Beispiel auf dem Karosserieelement angeordneten Dichtring 38 gedrückt werden, um so den Innenraum, der durch die Klappe 33 verschlossen wird, vor Verschmutzung zu schützen. In diesem Fall kommt es aber weniger darauf an, einen wirklich staubdichten und feuchtigkeitsdichten geschlossenen Raum bereitstellen zu können.

Die Fig. 9 zeigt die Außenseite des Karosserieelements, welches von außen zu sehen ist, wenn das Karosserieelement Teil eines Elektrofahrzeugs ist.

Fig. 10 zeigt im Vergleich zu Fig. 9 eine Innenansicht des Karosserieelements. Ein Stellantrieb 39 ist an einem aus Stabilitätsgründen verstärkten Außenwandbereich des Gehäuses 34 angebracht, so dass der zugehörige Riegel durch diesen verstärkten Wandbereich aufgrund einer entsprechenden Öffnung hindurch bewegt werden kann. Wird ein Stecker in die Ladebuchse mit dem Gehäuse 34 hineingesteckt, so gibt es im Gehäuse des Ladesteckers eine Öffnung, durch die der Riegel des Stellantriebs 39 hinein bewegt werden kann. In diesem Fall ist die Verbindung zwischen Ladestecker und Ladebuchse verriegelt.

Im rechten Winkel zum Stellantrieb 39 ist ein weiterer Stellantrieb 40 angebracht und zwar räumlich relativ weit entfernt von außen an dem Wandbereich, der den Innenraum bildet, der durch die Klappe 33 verschlossen werden kann. Mit Hilfe dieses weiteren Stellantriebs 40 kann die Klappe 33 verriegelt werden.

Die vorliegende Anmeldung nimmt die Priorität der deutschen Patentanmeldung 102010029446 vom 28. Mai 2010 sowie die Priorität der deutschen Gebrauchsmusteranmeldung 202010012379 vom 9. September 2010 in Anspruch.

### Bezugszeichenliste:

- 1: Stellantrieb
- 2: Anschlussbuchse
- 3a, 3b: Gehäuse / Halbschale
- 3c: Membran
- 4: Laschen
- 5: Riegel
- 6: Hebel / Griffelement
- 7: Dichtungsmanschette
- 8: Dichtring
- 9: Bohrung
- 10: Spindel
- 11: Antriebsrad
- 12: Welle
- 13: Antrieb / Elektromotor
- 14: Auslegearm
- 15: Mikroschalter
- 16: Hebel
- 17: Führungskanal
- 18: Dichtring
- 19: Hülse
- 20: Federkassette
- 21: Schrauben oder Nieten
- 22: Dichtring
- 23: Wand
- 24: Öse
- 25: Haken
- 26: Bowdenzug
- 27: Seilzug
- 28: Verriegelungselement
- 29: Falle
- 30: Schräge
- 31: Feder
- 32: erste Klappe
- 33: zweite Klappe
- 34: Gehäuse
- 35: federnde Lasche
- 36: Bolzen
- 37: Klammerelement
- 38: Dichtring
- 39: Stellantrieb
- 40: Stellantrieb

## Patentansprüche

1. Stellantrieb mit
- einem mittels einer Spindel (10) einfahrbaren und ausfahrbaren Riegel (5),
- einem Antriebsrad (11) mit Innengewinde,
- einem Antrieb (13) für das Antriebsrad (11),
- einem Außengewinde der Spindel (10), welches in das Innengewinde des Antriebrads (11) hineinreicht,
**gekennzeichnet durch** eine manuell betätigbare Notentriegelungseinrichtung, die einen Hebel (6, 16) und einen mit dem Riegel (5) in Verbindung stehenden Auslegearm (14) umfasst.

2. Stellantrieb nach Anspruch 1 mit
- einem elektrischen Antrieb (13) für das Einfahren und Ausfahren des Riegels (5),
- einem staub- und feuchtigkeitsdichten Innenraum, in dem sich der Antrieb (13) befindet,
- wobei die manuell betätigbare Notentriegelungseinrichtung einen Führungskanal (17) für den Hebel (6, 16) umfasst, der außerhalb des Innenraums angeordnet ist.

3. Stellantrieb nach einem der vorhergehenden Ansprüche wobei die Notentriegelungseinrichtung einen Bolzen (16) umfasst, der teilweise durch einen stationär angeordneten Dichtring (18) hindurch geschoben werden kann, um anschließend in einen staub- und feuchtigkeitsdicht verschlossenen Innenraum zu gelangen.

## Claims

1. An actuator comprising:
- a latch (5) which can be retracted and extended by means of a spindle (10),
- a drive wheel (11) having an internal thread,
- a drive (13) for the drive wheel (11),
- an external thread of the spindle (10), which extends into the internal thread of the drive wheel (11),
**characterized by** an emergency unlocking device which can be manually actuated and which comprises a lever (6, 16) and a cantilever arm (14) which is connected to the latch (5).

2. An actuator according to claim 1, comprising:
- an electric drive (13) for retracting and extending the latch (5),
- a dust and humidity tight interior space, in which the drive (13) is located,
- wherein the emergency unlocking device comprises a guide channel (17) for the lever (6, 16), which is placed outside the interior space.

3. An actuator according to one of the preceding claims, wherein the emergency unlocking device comprises a bolt (16), which can be partially pushed through a stationary seal ring (18), in order to get afterwards into an interior space which is closed in a dust and humidity tight manner.

## Revendications

1. Mécanisme d'actionnement comprenant :
- un verrou (5) susceptible d'être rétracté et déployé par moyen d'une broche (10),
- une roue d'entraînement (11) ayant un taraudage,
- un entraînement (13) pour la roue d'entraînement (11),
- un filetage extérieur de la broche (10), lequel s'étend jusqu'à l'intérieur du taraudage de la roue d'entraînement (11),
**caractérisé par** un dispositif de déverrouillage d'urgence qui est manuellement actionnable et qui comprend un levier (6, 16) et un bras (14) relié au verrou (5).

2. Mécanisme d'actionnement selon la revendication 1, comprenant :
- un entraînement électrique (13) pour rétracter et déployer le verrou (5),
- un espace intérieur étanche contre la poussière et l'humidité, dans lequel se trouve l'entraînement (13),
- le dispositif de déverrouillage d'urgence manuellement actionnable comprenant un canal de guidage (17) pour le levier (6, 16), le canal de guidage (17) étant disposé à l'extérieur de l'espace intérieur.

3. Mécanisme d'actionnement selon l'une des revendications précédentes, dans lequel le dispositif de déverrouillage d'urgence comprend un boulon (16) qui peut être partiellement passé à travers une bague d'étanchéité (18) disposée de manière stationnaire, pour arriver ensuite dans un espace intérieur fermé de manière étanche contre la poussière et l'humidité.
